# EUROPEAN PATENT APPLICATION

(11) **EP 3 667 642 A1**
(43) Date of publication of application: **17.06.2020**
(21) Application number: 18844549.8
(22) Date of filing: 04.07.2018
(51) Int. Cl.: G08G 3/02, B63B 43/18, B63B 49/00, G01V 3/12, G01V 8/10, G01V 11/00, G01S 7/41, G01S 13/86, G01S 13/93

(54) **COLLISION AVOIDANCE ASSISTANCE SYSTEM**

(30) Priority: 10.08.2017 JP 2017155291
(71) Applicant: Mizuno Yoshiro, Tokyo 100-0093 (JP)
(72) Inventor: Mizuno Yoshiro, Tokyo 100-0093 (JP)
(74) Representative: Rüger Abel Patentanwälte PartGmbB
(86) International application number: PCT/JP2018/025288
(87) International publication number: WO 2019/031115

(57) **Abstract**

The objective of the present disclosure is to provide a collision avoidance assistance system for assisting avoidance of collision between a ship and an obstacle using a result obtained by (i) detecting the obstacle on a ship travel route using sensors, (ii) identifying the detected obstacle, (iii) collecting sensor data, and (iv) analyzing the collected sensor data. By using the system including, as a component, a sensor group, a three dimensional viewing field acquirer, an obstacle identifier, a database regarding obstacles, an analyzer, a deep learning unit, a learning unit, and communicator, the obstacle on the ship travel route is detected and identified, and by using a result obtained by detecting, identifying, collecting, and analyzing sensor data, avoidance of collision between the ship and the obstacle is assisted.

## Description

### Technical Field

The present disclosure relates to a collision avoidance assistance system for ships to assist collision avoidance particularly using data sensed by sensors (that is referred to as "sensor data" hereinafter) .

### Background Art

Radar devices are known as a system for collision avoidance assistance for ships. The radar devices assist safe ship navigation by displaying a bird's eye view in which land, a building, another ship, or the like is viewed from high above to supplement visual information.

However, obstacles such as seaweed, driftwood, and floating objects cannot be detected, identified and evaluated using only information obtained by the radar devices detecting the obstacles, and thus the information obtained by the radar devices is insufficient for safe ship navigation.

### Citation List

### Patent Literature

Patent Literature 1 discloses a system for assisting safe ship navigation by utilizing various sensors other than the radar devices.

Patent Literature 1 discloses a system to: generate a scenery image viewed from a predetermined position in a predetermined direction based on (i) information outputted by a global positioning system (GPS), a gyroscope device, an attitude sensor device, a radar device, a television (TV) camera device, a night vision device, an echo sounding device, a sonar, a device for logs, and a steering device and (ii) a database regarding nautical chart information, and (iii) a database regarding information on ports and harbors; and display the scenery image on an image displaying means, thereby enabling a generation of and a display of a scenery image viewed from any position in any direction, such as a scenery image viewed from a cockpit of a ship in the direction of forward movement of the ship or a scenery image viewed from a rear portion of a deck of the ship in the backward direction.

Additionally, Patent Literature 1 discloses that the system (i) makes a collision avoidance calculation for predicting a collision risk, a stranding avoidance calculation for predicting a risk that a ship is stranded, a dangerous sea area calculation for calculating a dangerous sea area, and a recommended course calculation for calculating a recommended ship course, and (ii) displays, on the image displaying means, a recommended ship course calculated in the system, thereby securing the safety of ship route even if information obtained by visual observation by a ship pilot is insufficient.

However, since the system of Patent Literature 1 does not detect, identify or evaluate an obstacle, the ship pilot itself need to identify the obstacle on the basis of a scenery image displayed in image information.

Patent Literature 2 discloses a ship motion control system including sensors for collecting sea condition data. In the system of Patent Literature 2, analyzer software receives the sea condition data and predicts occurrence of a sea condition event. Calculator software calculates an operation command in preparation for the occurrence of the sea condition event. Interface software transmits the operation command to the ship control system.

However, the sea condition collected by the system of Patent Literature 2 is mainly conditions of waves of sea, and the system of Patent Literature 2 does not detect or identify obstacles such as seaweed.
Patent Literature 1: Unexamined Japanese Patent Application Kokai Publication No. H06-301897
Patent Literature 2: U.S. Patent Application Publication No. 2014-114509

### Summary of Invention

### Technical Problem

An objective of the present disclosure is to provide a system for assisting avoidance of collision between a ship and an obstacle by collecting various types of sensor data in a ship travel route using sensors, leaning from the collected sensor data, and detecting, identifying and evaluating an obstacle area as a result of the learning.

### Solution to Problem

In a first aspect of the present disclosure, a collision avoidance assistance system for assisting avoidance of collision between a ship and an obstacle using sensors selected from among a video camera, a color meter, a spectrometer, an infrared sensor, a temperature sensor, a radar, a device for LIDAR, a sonar, an air-speed meter, a ship-speed meter, and a global navigation satellite system (GNSS) receiver is provided, and the system is characterized by including (a) three dimensional viewing field acquisition means for acquiring a three dimensional viewing field in a ship travel route by integrating sensor data obtained via sensors selected from among the video camera, the infrared sensor, and the device for LIDAR, and (b) learning means for (i) collecting the sensor data obtained via the sensors in the three dimensional viewing field in which the obstacle is located, and (ii) outputting an evaluation of the obstacle based on the collected sensor data by using a deep learning method in which a pair of the collected sensor data and the evaluation of the obstacle is used as learning data, wherein the evaluation of the obstacle includes identification information about a floating object on the sea, and the system provides, as information for assisting avoidance of collision with the obstacle, an evaluation of a current obstacle that is outputted by the learning means based on the sensor data on a current three dimensional viewing field obtained via the sensors.

The term, "LIDAR", means "Light Detection and Ranging", and the device for LIDAR is a sensor for detecting light and measuring a distance.

The sensors may be fixed to poles included in the ship.

Alternatively, the sensors may be attached to a drone for obtaining an observation altitude and an observation distance, and the drones may be connected to the ship with a wired or wireless connection.

The evaluation of the obstacle may further include identification information about an object on or in the sea, and the object on or in the sea is another ship different from the ship, a buoy, or a hidden rock.

The evaluation may be displayed on at least one selected from among (i) a screen installed on the ship in order to warn a ship pilot, (ii) a head-up display installed on the ship, (iii) a terminal device for the ship pilot, (iv) a head mounted display for the ship pilot, and (v) a visor for the ship pilot.

The evaluation may be transmitted to an autopilot system installed in the ship and used for avoiding potential collisions.

The evaluation may be transmitted by a device for long distance communication and may be shared with a database on a network or a system of another ship sailing near the ship.

The learning data may include (i) a pair of: sensor data collected in another collision avoidance assistance system different from the present system; and an evaluation of the obstacle or (ii) a pair of: sensor data generated as test data; and an evaluation of the obstacle.

The learning means may collect sensor data in a plurality of collision avoidance assistance systems connected to one another via communication and may use, as learning data, a pair of the collected sensor data and an evaluation of the obstacle.

### Brief Description of Drawings

FIG. 1 is a schematic plane view illustrating a sea area on which a ship equipped with a collision avoidance assistance system according to an embodiment of the present disclosure sails;
FIG. 2 is a schematic plane view illustrating the ship equipped with the system according to the embodiment;
FIG. 3 is a schematic side view illustrating the ship equipped with the system according to the embodiment;
FIG. 4 is a block diagram illustrating the collision avoidance assistance system included in the ship, sensors connected to the collision avoidance assistance system, and various systems;
FIG. 5 is a schematic view illustrating data on a three dimensional viewing field formed by a three dimensional region and an area of an obstacle included in the three dimensional region;
FIG. 6 is a schematic view illustrating assistance information displayed on a screen; and
FIG. 7 is a schematic view illustrating the three dimensional viewing field projected on a head-up display.

### Description of Embodiments

A concrete example of the present disclosure is described below in an embodiment with reference to the drawings.

Operations of functional components of the embodiment are achieved by (i) executing a pre-installed control program such as firmware by a processor of a system circuit and (ii) making the processor cooperate with various devices that are components of the system. Also, the program is stored in a computer-readable recording medium, is read from the recording medium by the processor, and is executed by an operation of a user such as a ship pilot or by receiving a signal from a device included in the system.

### Embodiment 1

### Overall view including a network

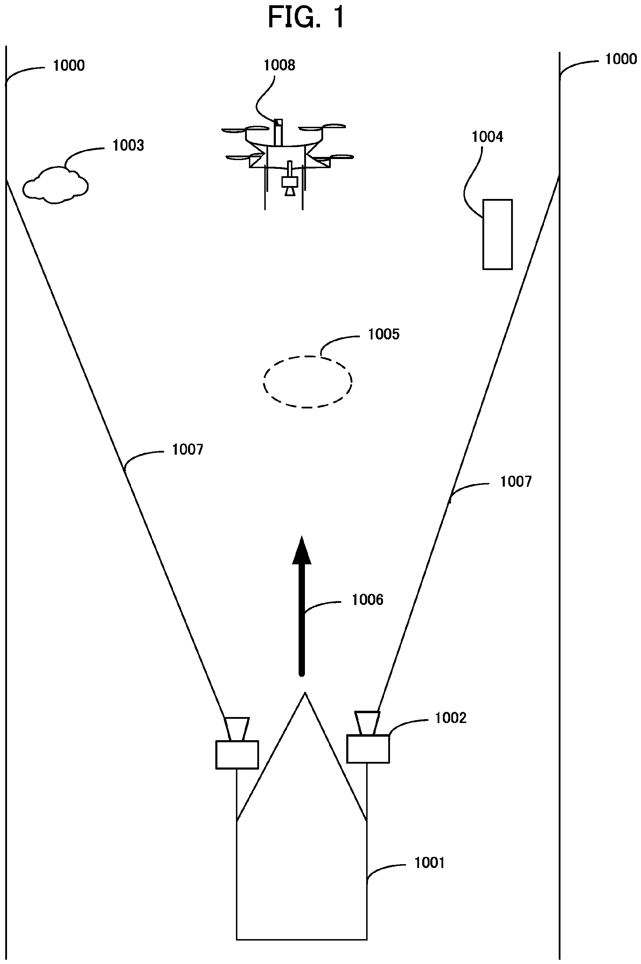

FIG. 1 is a plane schematic view illustrating a water surface on which a ship equipped with a collision avoidance assistance system according to an embodiment of the present disclosure sails. FIG. 1 illustrates (i) a ship 1001 including a sensor group 1002 and sailing on a waterway represented by an area between two straight lines 1000, and (ii) a seaweed 1003, a buoy 1004, and a hidden rock 1005 that are obstacles on or in the sea. An arrow 1006 denotes a direction of a navigation route of the ship, and an area between two straight lines 1007 represents a plan region of a three dimensional viewing field in which the obstacles are detected using the sensor group 1002 of the ship. A drone 1008 is connected to the ship 1001 via a wireless communication, includes a video camera, approaches, from the air, an obstacle located in a region of the three dimensional viewing field and closely examine the obstacle, and transmits sensor data to the system of the ship. Although the video camera is used as a sensor installed in the drone in the present embodiment, the video camera may be replaced with a color meter, a spectrometer, an infrared sensor, a thermometer or the like in accordance with a degree of necessity of the examination of the obstacle. Also, in the present disclosure, the connection between the drone and the ship is not limited to the wireless connection, and the drone may be appropriately connected to the ship in a wired connection method.

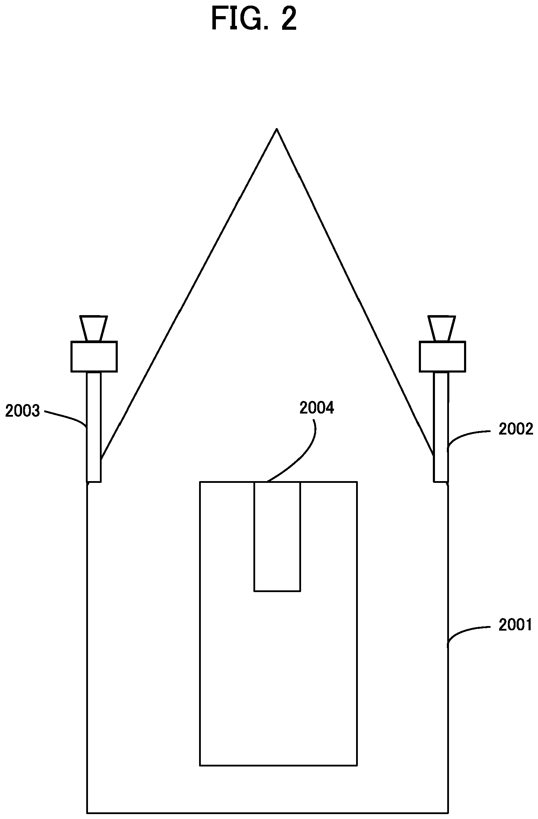

FIG. 2 is a schematic plane view illustrating the ship equipped with the system according to the embodiment. A ship body 2001 of the ship includes a right pole 2002, a left pole 2003 and a middle pole 2004, and a sensor is attached to each of these poles.

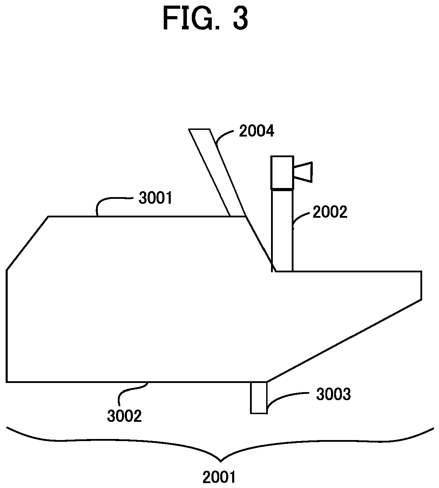

FIG. 3 is a schematic side view illustrating the ship equipped with the system according to the embodiment. Only the right pole 2002 among the left and right poles symmetrically arranged on the ship body is illustrated in FIG. 3. The middle pole 2004 is disposed on a roof of a room 3001 of the ship. A sonar 3003 is disposed on a bottom 3002 of the ship.

A video camera, a color meter, a spectrometer, and an infrared sensor are mounted on upper portions of the right pole 2002 and the left pole 2003. A radar, a device for LIDAR, an air-speed meter, a thermometer, a ship-speed meter, and a GNSS receiver are mounted on the middle pole 2004.

In the present embodiment, the thermometer is an infrared thermometer enabling measurement of a temperature of an area of an obstacle without contact.

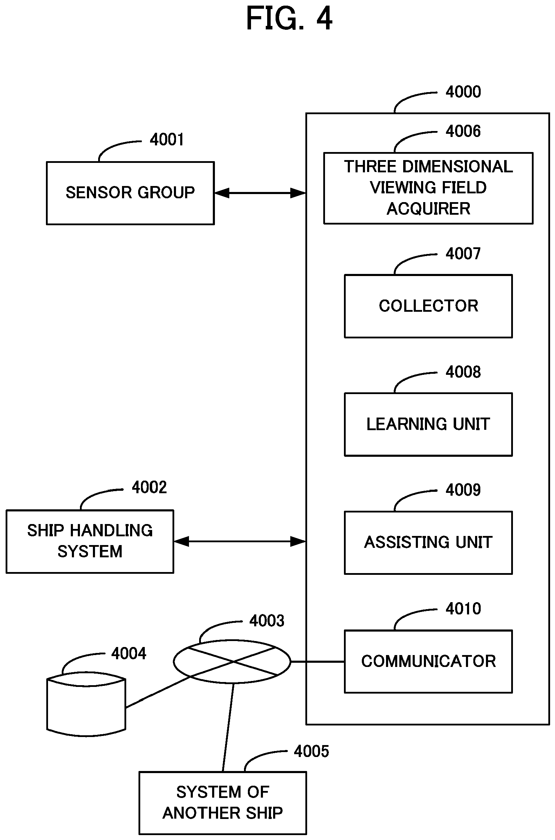

FIG. 4 is a block diagram illustrating the collision avoidance assistance system included in the ship, sensors connected to the collision avoidance assistance system, and various systems.

The collision avoidance assistance system 4000 is connected to a sensor group 4001 installed in the ship and a ship handling system 4002 of the ship. Additionally, the collision avoidance assistance system is connected, via a communication network 4003, to (i) a database 4004 about information on ship handling and (ii) a system 4005 of another ship.

Functional components of the collision avoidance assistance system 4000 are a three dimensional viewing field acquirer 4006, a collector 4007, a learning unit 4008, an assisting unit 4009, and a communicator 4010.

The sensor group 4001 expresses all of sensors attached to the ship 1001 and the drone 1008, and a data set obtained by the sensor group is transmitted to the collision avoidance assistance system.

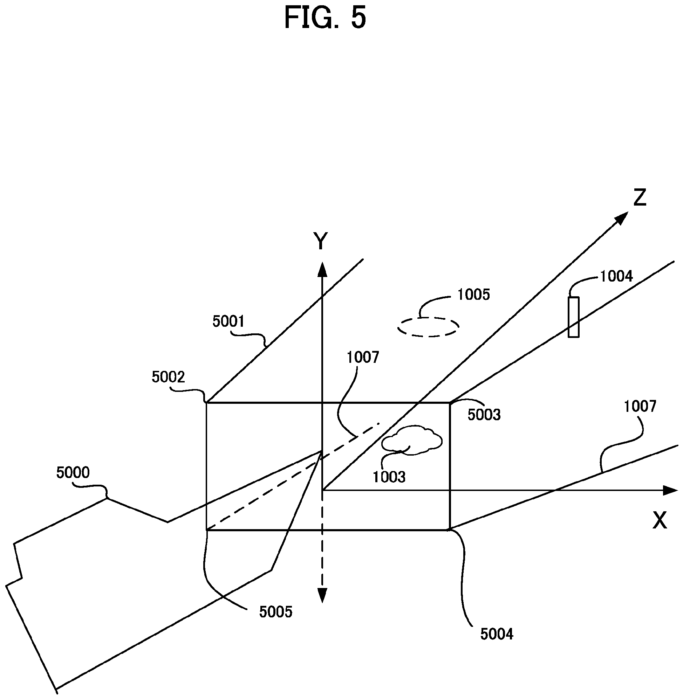

The three dimensional viewing field generator 4006 forms data on a three dimensional region in the direction of the navigation route of the ship from (i) image data obtained by the video camera and the infrared sensor disposed on the right and left poles and included in the sensor group 4001 and (ii) data on an object in the sea obtained by the sonar, and generates a three dimensional viewing field including an area of the waterway and an area of the obstacle other than the area of the waterway. FIG. 5 is a schematic view illustrating data on a three dimensional viewing field formed by a three dimensional region and an area of an obstacle included in the three dimensional region. In the present embodiment, a three dimensional region 5001 including areas of the seaweed 1003, the buoy 1004, and the hidden rock 1005 that are obstacles is formed in a three dimensional coordination space in which a point of the water's surface onto which a bow of the ship 5000 is projected is defined as the origin (X, Y, Z) = (0, 0, 0).

In this case, the three dimensional region is a region including two straight lines 1007 and extending with depth from four points 5002, 5003, 5004, and 5005 on the XY-plane in the Z-direction denoting the direction in which the ship sails.

The collector 4007 collects a pair of (i) a data set regarding the three dimensional viewing field in which an obstacle such as a drift wood, the seaweed, the other ship, the buoy, the hidden rock, or a shoal is located and (ii) a user's operation of the ship handling system 4002 in response to the three dimensional viewing field or an inputted user's evaluation of the three dimensional viewing field.

In addition to data detected by the sensor group such as a shape, a color, a temperature, and speed, a data set of the present disclosure may include (i) data on a type of and a position of a structural object located on the sea as indicated by nautical chart data and/or (ii) data on a type of and a position of the floating object or the like indicated on a sea warning information.

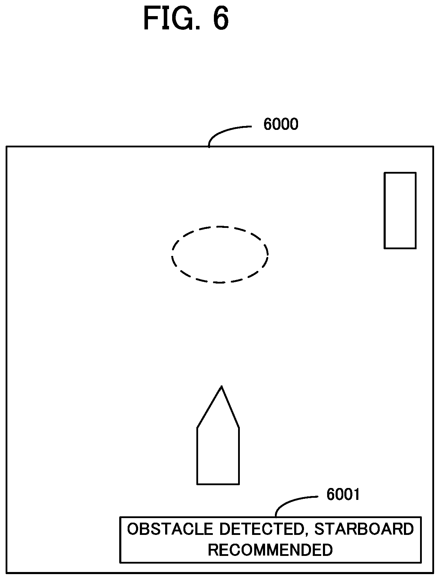

During assistance of collision avoidance, the data set regarding a current three dimensional viewing field is inputted into the learning unit 4008 for the purpose of generating assistance information, and the learning unit 4008 outputs an evaluation of an obstacle located in the current three dimensional viewing field. The evaluation is outputted to the assisting unit 4009 and is transmitted, as assistance information displayed on the screen disposed in the ship, to the ship handling system. Although the current evaluation outputted by the learning unit is transmitted as assistance information to be displayed in the present embodiment, assistance information of the present disclosure is not limited to the current evaluation outputted by the learning unit, and the evaluation outputted by the learning unit may be transmitted to an autopilot system incorporated into the ship handling system with the evaluation unchanged. FIG. 6 is a schematic view illustrating assistance information displayed on a screen. A message 6001 indicating existence of an obstacle and a recommended ship handling is displayed on the screen 6000 in a radar screen of the ship handling system.

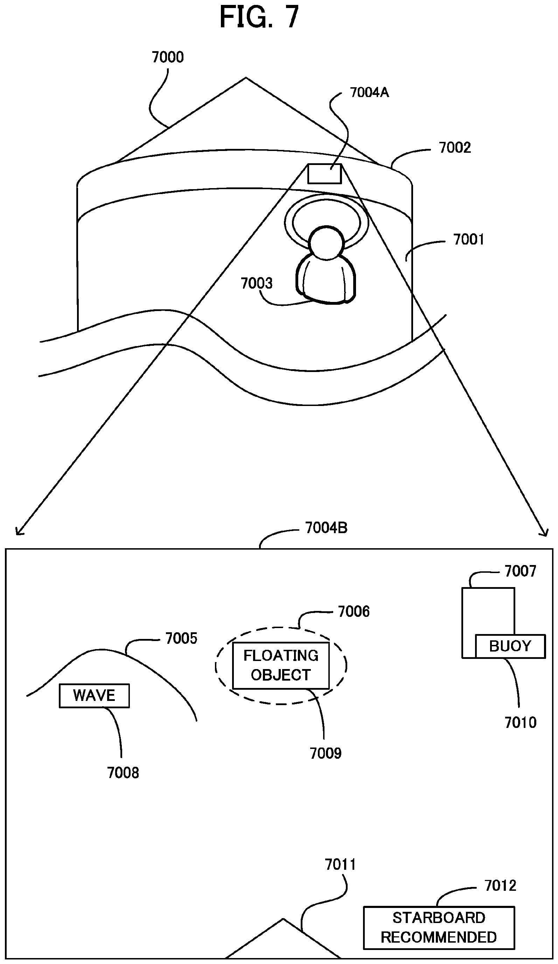

In the present disclosure, a method in which a three dimensional viewing field is generated on the head-up display disposed on a windshield of the cockpit of the ship and the assistance information is displayed on the head-up display may be used as a manner of displaying the assistance information on a screen. FIG. 7 is a schematic view illustrating the three dimensional viewing field generated on the head-up display and the assistance information displayed on the head-up display. In the bow 7000 of the ship, the head-up display 7004A is disposed on the windshield 7002 of the cockpit 7001 such that the head-up display 7004A is positioned in a viewing field of the ship pilot 7003. The numeral reference 7004B denotes an enlarged image of the head-up display. In FIG. 7, a wave 7005, a floating object 7006 and a buoy 7007 that are detected and identified are displayed in the three dimensional viewing field. The floating object 7006 expressed by the dotted line is colored and displayed on the display, and the floating object 7006 is displayed as a dangerous object that should be avoided. The numeral references 7008, 7009 and 7010 denote indicator labels indicating names of identified obstacles, and the indicator labels indicate the wave, the floating object and the buoy. The numerical number 7011 denotes the bow of the ship and indicates a current direction of travel of the ship. The reference numeral 7012 denotes ship handling recommended by the system in the current situation. As a method of displaying assistance information, the method in which the assistance information is displayed on the screen disposed on the ship and the method in which the assistance information is displayed on the head-up display are presented in this example. However, methods of displaying the assistance information that are applicable to the present disclosure are not limited to such methods, and a method in which the assistance information is displayed on a terminal device of the ship pilot, a head mounted display of the ship pilot, or a visor of the ship pilot is applicable to the present disclosure, as necessary.

The system of the present embodiment also learns from (i) a pair of the data set collected during the operation for the above-described assistance and the output on which the assistance information is based, and (ii) the ship handling operation actually selected by the ship handling system. However, in order to efficiently improve the functions of the learning unit 4008, the communicator 4010 may receive a pair of (i) a data set collected by the system 4005 of the other ship and (ii) an output produced in the system 4005, and the system may use, as learning data for the learning unit 4008, the received pair of the data set and the output from the other ship. Additionally, the system may use, as learning data, (i) a data set of test data formed by simulating the three dimensional viewing field in which an obstacle is located and (ii) an output expressing an evaluation of a situation indicated by that data set.

By using the above-described system, a system for assisting collision avoidance in a situation in which an obstacle is located on a ship travel route can be provided.

This application claims the benefit of Japanese Patent Application No. 2017-155291, the entire disclosure of which is incorporated by reference herein.

### Industrial Applicability

The present disclosure is applicable to a ship industry, a ship-handling industry, and an industry such as an agency for providing ships with information.

### Reference Signs List

- 1001: Ship
- 1002: Sensor group
- 1003: Seaweed
- 1004: Buoy
- 1005: Hidden rock
- 1006: Direction of navigation route
- 1007: Three dimensional viewing field
- 1008: Drone

## Claims

1. A collision avoidance assistance system for assisting avoidance of collision between a ship and an obstacle using sensors selected from among a video camera, a color meter, a spectrometer, an infrared sensor, a temperature sensor, a radar, a device for LIDAR, a sonar, an air-speed meter, a ship-speed meter, and a global navigation satellite system (GNSS) receiver, the system comprising:
(a) three dimensional viewing field acquisition means for acquiring a three dimensional viewing field in a ship travel route by integrating sensor data obtained via sensors selected from among the video camera, the infrared sensor, and the device for LIDAR; and
(b) learning means (i) for collecting the sensor data obtained via the sensors in the three dimensional viewing field in which the obstacle is located and (ii) for outputting an evaluation of the obstacle based on the collected sensor data by using a deep learning method in which a pair of the collected sensor data and the evaluation of the obstacle is used as learning data, wherein
the evaluation of the obstacle includes identification information about a floating object on a sea, and
the system provides, as information for assisting avoidance of collision with the obstacle, an evaluation of a current obstacle that is outputted by the learning means based on the sensor data on a current three dimensional viewing field obtained via the sensors.

2. The collision avoidance assistance system according to claim 1, wherein the sensors are fixed to poles included in the ship.

3. The collision avoidance assistance system according to claim 1, wherein the evaluation of the obstacle further includes identification information about an object on or in the sea, and
the object on or in the sea is another ship different from the ship, a buoy, or a hidden rock.

4. The collision avoidance assistance system according to claim 1, wherein the sensors is attached to a drone for obtaining an observation altitude and an observation distance, and the drone is connected to the ship with a wired or wireless connection.

5. The collision avoidance assistance system according to any one of claims 1 to 4, wherein
the evaluation is displayed on at least one selected from among (i) a screen installed on the ship in order to warn a ship pilot, (ii) a head-up display installed on the ship, (iii) a terminal device for the ship pilot, (iv) a head mounted display for the ship pilot, and (v) a visor for the ship pilot.

6. The collision avoidance assistance system according to any one of claims 1 to 4, wherein the evaluation is transmitted to an autopilot system installed in the ship and used for avoiding potential collisions.

7. The collision avoidance assistance system according to any one of claims 1 to 4, wherein the evaluation is transmitted by a device for long distance communication and is shared with a database on a network or a system of another ship sailing near the ship.

8. The collision avoidance assistance system according to any one of claims 1 to 7, wherein the learning data includes
a pair of (i) sensor data collected in another collision avoidance assistance system different from the system and (ii) an evaluation of the obstacle, or
a pair of (i) sensor data generated as test data and (ii) an evaluation of the obstacle.

9. The collision avoidance assistance system according to any one of claims 1 to 8, wherein the learning means (i) collects sensor data in a plurality of collision avoidance assistance systems connected to one another via communication and (ii) uses, as learning data, a pair of the collected sensor data and an evaluation of the obstacle.
